# EUROPEAN PATENT APPLICATION

(11) **EP 1 803 945 A2**
(43) Date of publication of application: **04.07.2007**
(21) Application number: 06022423.5
(22) Date of filing: 26.10.2006
(51) Int. Cl.: F16B 25/10

(54) **Wood screw**

(30) Priority: 30.12.2005 CN 200510137496
(71) Applicant: Kwantex Research Inc., Guanmiao Township T'ai nan 71848 (TW)
(72) Inventor: Lin, Chao Wei, Guanmiao Township Tainan County 71848 (TW)
(74) Representative: Kirschner, Klaus Dieter

(57) **Abstract**

A wood screw (300) includes a head (310), a shank (320), an engagement thread, at least one parallel thread and at least one guiding thread. The head is for receiving a fastening tool. The shank extends from the head and includes a parallel shank portion (324), a tapered portion (322) formed at the tip of the parallel shank portion and a pointed end (326) formed at the tip of the tapered portion. The engagement thread (330) is formed on the parallel shank portion. The at least one parallel thread (340) is formed on the tapered portion. Then at least one guiding thread (450) is formed on the tapered portion and between the parallel thread and the engagement thread.

## Description

The present invention relates to a screw, and more particularly, to a wood screw.

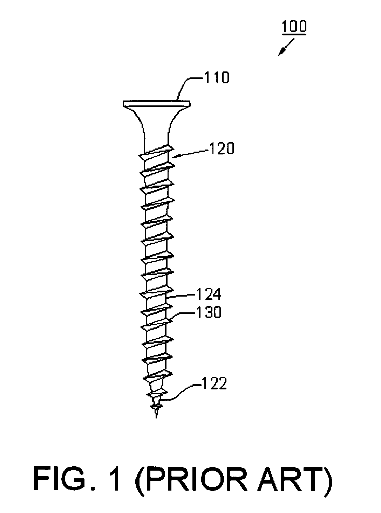

Referring to FIG. 1, it illustrates a conventional wood screw 100. The wood screw 100 has a head 110 for receiving a fastening tool, a shank 120 extending from the head 110 and including a parallel shank portion 124 and a tapered portion 122 formed at the tip of the parallel shank portion 124, and a helical thread 130 formed on the tapered portion 122 and the parallel shank portion 124.

The wood screw 100 can be screwed directly into an article, such as wood without drilling a hole prior to driving. However, the wood screw 100 has the drawbacks that the driving torque required for fastening becomes greater and greater while driving the screw 100 into the wood because the friction caused by that the parallel shank portion 124 and thread 130 are in contact with the wood is getting great. Therefore, the wood is apt to be cracked while the screw 100 is driven into the wood.

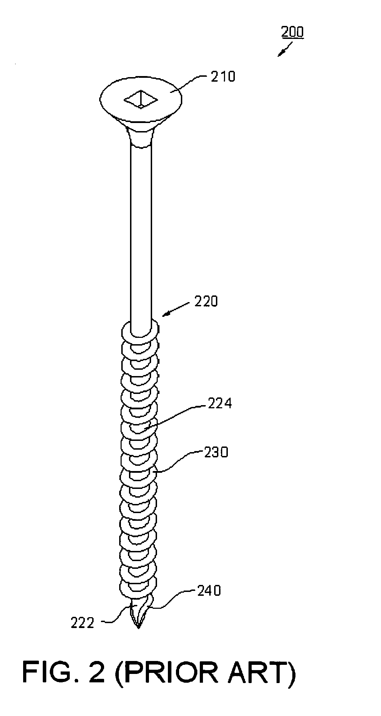

In order to solve these problems, the Taiwan Patent Publication Number M259860, entitled "A WOOD SCREW CAPABLE OF CUTTING WOOD", discloses a wood screw 200 capable of cutting wood (see FIG. 2). The wood screw 200 has a head 210 for receiving a fastening tool, a shank 220 extending from the head 210 and including a parallel shank portion 224 and a tapered portion 222 formed at the tip of the parallel shank portion 224, an engagement thread 230 formed on the parallel shank portion 224, and a cutting thread 240 formed on the tapered portion 222 and connecting with the engagement thread 230. The engagement thread 230 has a helix angle greater than that of the cutting thread 240. While screwing the wood screw 200 into a wood, the cutting thread 240 continues to cut the wood fiber. The driving torque required for the wood screw 200 to be drilled into a wood will therefore be reduced in comparison with the screw 100 having no cutting thread. The cracking of the wood can also be avoided while the wood screw 200 is to be drilled. However, the cutting thread 240 having a helical thread to cut the wood fiber is difficult to be formed on the wood screw 200. This is because that the helix angle of the engagement thread 230 is required to be different from that of the cutting thread 240 and therefore the thread rolling dies for making the wood screw 200 are difficult to align with each other while the engagement thread 230 and cutting thread 240 are simultaneously formed on the wood screw 200 through the thread rolling dies.

It is an object of the present invention to provide a wood screw the parallel thread of which formed on the tapered portions can first drill a wide hole and then cut the wood fiber whereby drilling is made easy and cracking of the wood is avoided.

This object is achieved by the wood screw of claim 1. Preferred embodiments of the wood screw of the invention are characterized in the sub-claims.

In one embodiment, the wood screw according to the present invention includes a head and a shank. The top of the head has a recess for receiving a fastening tool. The shank extends from the head. The shank has a parallel shank portion aligning with the screw axis, a tapered portion formed at the tip of the parallel shank portion, and a pointed end formed at the tip of the tapered portion. The parallel shank portion has an engagement thread formed thereon for engaging with the wood. The wood screw has at least one parallel thread formed on the tapered portion which aligns with the screw axis.

In another embodiment, the wood screw according to the present invention further includes at least one guiding thread. The guiding thread is formed on the tapered portion and between the parallel thread and engagement thread. The guiding thread is capable of cutting and expanding the wood fiber during screwing and making ease of engaging the engagement thread with the wood.

In a further embodiment, the wood screw according to the present invention includes at least one cutting thread. The cutting thread is formed on the tapered portion and has a parallel thread extending from the pointed end and a guiding thread extending from the tip of the parallel thread and reaching the tip of the parallel shank portion and not connecting to the engagement thread.

Preferred embodiments of the invention will be more readily apparent from the following detailed description, which proceeds with reference to the accompanying drawings.
FIG. 1 illustrates a conventional wood screw.
FIG. 2 illustrates another conventional wood screw with a cutting thread.
FIG. 3 illustrates a wood screw according to the first embodiment of the present invention.
FIG. 4 illustrates a wood screw according to the second embodiment of the present invention.
FIG. 5 illustrates a wood screw according to the third embodiment of the present invention

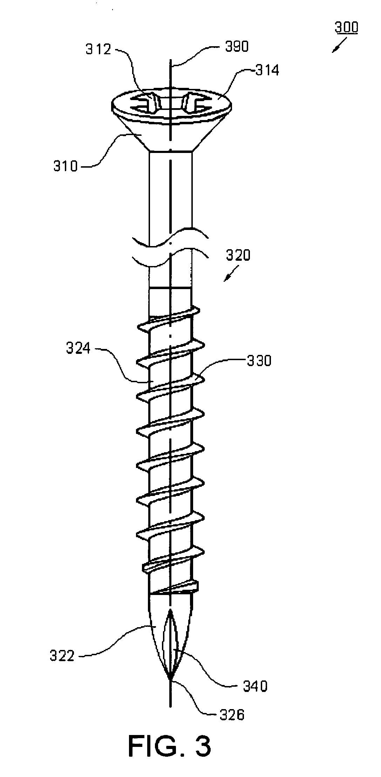

Referring to FIG. 3, it illustrates a wood screw 300 according to the first embodiment of the present invention. The wood screw 300 has a head 310 and a shank 320. The top 314 of the head 310 has a recess 312 for receiving a fastening tool. The shank 320 extends from the head 310 and defines an axis 390. The shank 320 has a parallel shank portion 324, a tapered portion 322 formed at the tip of the parallel shank portion 324, and a pointed end 326 formed at the tip of the tapered portion 322. The parallel shank portion 324 has an engagement thread 330 formed thereon. The engagement thread 330 can engage with the wood and provide a resistance to pull-out. The wood screw 300 has at least one parallel thread 340 formed on the tapered portion 322 and, preferably, parallel to the axis 390. The parallel thread 340 has substantially the shape of a spindle, that is, the parallel thread 340 has the largest thickness in the middle portion and tapers toward each end. Preferably, the parallel thread 340 is symmetrical along its length, and the wood screw 300 according to the present embodiment has at least two parallel threads 340 symmetrically to each other formed on the tapered portion 322.

The parallel thread 340 of the wood screw 300 according to the present invention can cut the wood fiber while the wood screw 300 is screwed into a wood. The driving torque required for the wood screw 300 to be drilled into a wood will therefore be reduced in comparison with the conventional screw 100. The cracking of the wood can also be avoided while the wood screw 300 is to be drilled.

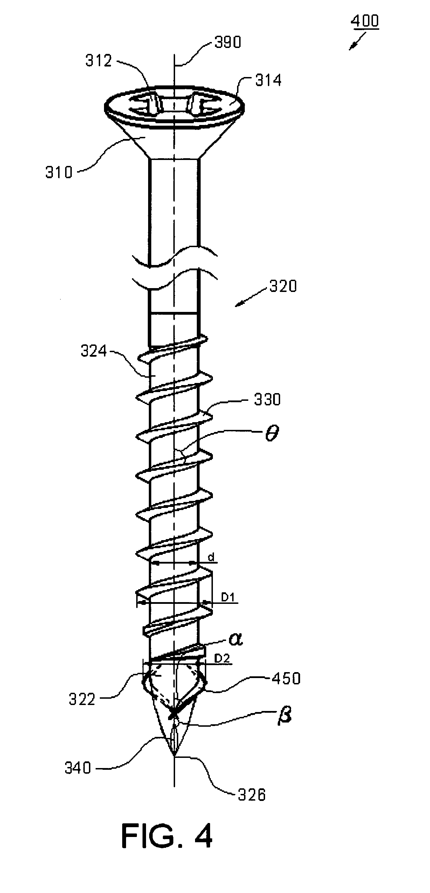

Referring to FIG. 4, it illustrates a wood screw 400 according to the second embodiment of the present invention. The wood screw 400 has a configuration similar to that of the wood screw 300, where identical reference numerals have been used when designating substantially identical elements that are common to the figures. The wood screw 400 further includes at least one guiding thread 450 formed on the tapered portion 322 and between but not connecting with the parallel thread 340 and the engagement thread 330, the guiding thread 450 extends for at most one turn. The guiding thread 450 has a helix angle α greater than the helix angle β of the parallel thread 340 and smaller than the helix angle θ of the engagement thread 330. The helix angle is defined as the angle of the thread helix with respect to the axis 390. The largest crest diameter D2 of the guiding thread 450 is greater than the root diameter d of the engagement thread 330 and smaller than the crest diameter D1 of the engagement thread 330. Preferably, the wood screw 400 according to the present embodiment has at least two parallel threads 340 symmetrically to each other formed on the tapered portion 322 and at least two guiding threads 450 symmetrically to each other formed on the tapered portion 322.

The guiding thread 450 of the wood screw 400 according to the present invention can cut and expand the wood fiber while the wood screw 400 is screwed into a wood and then guide the engagement thread 330 to engaging with the wood. The reason is that the guiding thread 450 has a smaller helix angle and therefore can cut and expand wood fiber easier. The engagement of the guiding thread 450 with the wood forces the wood screw 400 first to be driven into the wood and then a less driving torque is required to engage the engagement thread 330 with the wood. Such design can also keep the wood from splitting. Since wood fibers are continuously cut and expanded by the guiding thread 450, and then the engagement thread 330 starts to engage with the wood.

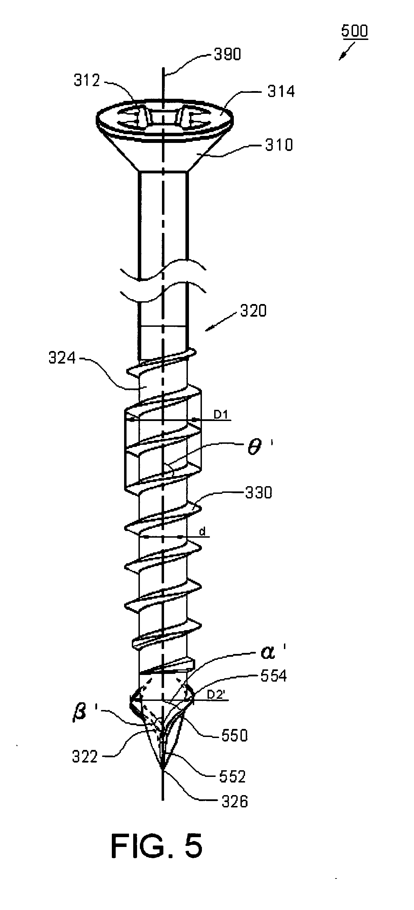

Referring to FIG. 5, it illustrates a wood screw 500 according to the third embodiment of the present invention. The wood screw 500 has a configuration similar to that of the wood screw 400, where identical reference numerals have been used when designating substantially identical elements that are common to the figures. The wood screw 500 has at least one cutting thread 550 formed on the tapered portion 322 that the cutting thread 550 is similar to the combination of the parallel thread 340 and the guiding thread 450 of the wood screw 400. The cutting thread 550 includes a parallel thread 552 extending from the pointed end 326 and a guiding thread 554 extending from the tip of the parallel thread 552 and reaching the tip of the parallel shank portion 324, but not connecting with the engagement thread 330. The guiding thread 554 has a helix angle α' greater than the helix angle β' of the parallel thread 552 and smaller than the helix angle 6' of the engagement thread 330. The largest crest diameter D2' of the guiding thread 554 is greater than the root diameter d of the engagement thread 330 and smaller than the crest diameter D1 of the engagement thread 330. The parallel thread 552 is preferably parallel to the axis 390. The guiding thread 554 preferably extends for at most one turn. Preferably, the cutting thread 550 is symmetrical along its thread helix, and the wood screw 500 according to the present embodiment has at least two cutting threads 550 symmetrically to each other formed on the tapered portion 322.

The parallel thread 552 and the guiding thread 554 of the wood screw 500 have the effects identical to the effects shown by the parallel thread 340 and the guiding thread 450 of the wood screw 400. Thus, any further illustrations of the cutting thread 550 are omitted herein. The differences between the wood screw of the present invention and the wood screw disclosed in the Taiwan Patent Publication Number M259860 are the facts that the cutting thread of the wood screw according to the present invention has variable thread leads and does not connect with the engagement thread. The cutting thread having a parallel thread according to the present invention can more efficiently cut the wood during drilling than the cutting thread having a helical thread in the prior wood screw. Additionally, when the wood screws according to the present invention are made by two pairs of thread rolling dies, there is no need to carefully align the two pairs of thread rolling dies with each other since the guiding thread is not required to connect with the engagement thread.

Although the preferred embodiments of the invention have been disclosed for illustrative purposes, those skilled in the art will appreciate that various modifications, additions and substitutions are possible, without departing from the scope of the invention as disclosed in the accompanying claims.

## Claims

1. A wood screw, comprising :
a head for receiving a fastening tool;
a shank extending from the head and defining an axis, the shank having a parallel shank portion, a tapered portion formed at the tip of the parallel shank portion and a pointed end formed at the tip of the tapered portion;
an engagement thread formed on the parallel shank portion; and
at least one parallel thread formed on the tapered portion

2. The wood screw as claimed in claim 1, wherein the parallel thread has substantially the shape of a spindle.

3. The wood screw as claimed in claim 1 or 2, wherein the parallel thread is parallel to the axis.

4. The wood screw as claimed in any of the preceding claims, wherein the parallel thread is symmetrical along its length.

5. The wood screw as claimed in any of the preceding claims, wherein the wood screw comprises at least two parallel threads symmetrically to each other formed on the tapered portion.

6. The wood screw as claimed in claim 5, wherein the parallel threads are parallel to the axis.

7. The wood screw as claimed in any of the preceding claims, further comprising at least one guiding thread formed on the tapered portion and between the parallel thread and engagement thread.

8. The wood screw as claimed in claim 7, wherein the helix angle of the guiding thread is greater than that of the parallel thread and smaller than that of the engagement thread.

9. The wood screw as claimed in claim 7 or 8, wherein the largest crest diameter of the guiding thread is greater than the root diameter of the engagement thread and smaller than the crest diameter of the engagement thread.

10. The wood screw as claimed in claim 7 or 8, wherein the wood screw comprises at least two parallel threads symmetrically to each other formed on the tapered portion and at least two guiding threads symmetrically to each other formed on the tapered portion.

11. The wood screw as claimed in claim 1 comprising :
at least one cutting thread formed on the tapered portion, the cutting thread comprising a parallel thread extending from the pointed end and a guiding thread extending from the tip of the parallel thread and reaching the tip of the parallel shank portion,
wherein the parallel thread is parallel to the axis and the guiding thread extends for at most one turn.

12. The wood screw as claimed in claim 11, wherein the helix angle of the guiding thread is greater than that of the parallel thread and smaller than that of the engagement thread.

13. The wood screw as claimed in claim 11, wherein the largest crest diameter of the guiding thread is greater than the root diameter of the engagement thread and smaller than the crest diameter of the engagement thread.

14. The wood screw as claimed in claim 11, wherein the wood screw comprises at least two cutting threads symmetrically to each other formed on the tapered portion.

15. The wood screw as claimed in claim 11, wherein the cutting thread is symmetrical along its thread helix.
